Europäisches Patentamt

(19) European Patent Office

Office européen des brevets

(11) EP 0 940 090 A1

(12) EUROPEAN PATENT APPLICATION

(43) Date of publication:
08.09.1999 Bulletin 1999/36

(51) Int. Cl.$^6$: A23L 3/3508

(21) Application number: 98204480.2

(22) Date of filing: 30.12.1998

(84) Designated Contracting States:
AT BE CH CY DE DK ES FI FR GB GR IE IT LI LU
MC NL PT SE
Designated Extension States:
AL LT LV MK RO SI

(30) Priority: 27.02.1998 US 76403 P

(71) Applicant:
SOCIETE DES PRODUITS NESTLE S.A.
1800 Vevey (CH)

(72) Inventor: Philipp, Gert Dieter
21423 Winsen (Luhe) (DE)

(74) Representative:
Vuille, Roman et al
Avenue Nestlé 55
1800 Vevey (CH)

(54) Process for preserving food products

(57) A process for the manufacture of food products which have been preserved under mild conditions, which includes a treatment of a food to kill microorganisms and their spores in a manner which is mild for the food by adding to the food a combination of (i) at least one sodium salt of a lipid-soluble, optionally hydroxysubstituted, C2 or C3 fatty acid and (ii) at least one non-lipid-soluble acidulant which has a pKa below that of the C2 or C3 fatty acid and which forms complexes with doubly charged alkaline earth metal ions, optionally with (iii) additional amounts of a sodium salt of the acidulant in an amount such that the pH of the food is in the range of about 4.5 to 7, and the concentration of undissociated fatty acid is at least 0.4% by weight based on the weight of the food. No thermal sterilization is necessary for preservation; on the contrary, a final thermal treatment with less than pasteurization conditions is sufficient.

EP 0 940 090 A1

Printed by Xerox (UK) Business Services
2.16.7/3.6

## Description

## Background Of The Invention

The present invention relates to a process for the manufacture of food products that have been preserved under mild conditions. The process includes treatment of the food products to kill microorganisms and their spores therein. The resulting food products are preserved by application of the process to have high microbiological stability and no more than a minimal impairment of their valuable constituents.

To manufacture various packaged food products, it is necessary to confer thereon a microbiological stability for at least the period of time regarded as the use-by period which is customary for the particular food. There are numerous processes for preserving food products, and they can be generally divided into those in which preservation is achieved by (1) changes in temperature (blanching, pasteurization, sterilization, cold storage, frozen storage), (2) removal of moisture (drying, freeze-drying, brining, salt pickling, sugaring), (3) the addition of preservatives (smoking, use of alcohol or food preservatives), (4) acidification (acid pickling), (5) removal or exclusion of oxygen, or (6) irradiation.

Processes of particular importance for products that have a high moisture content, especially liquid or pasty foods and preserves with a liquid phase, are those which conduct pasteurization or sterilization and acid pickling treatments. Pasteurization refers to a heat treatment of thermosensitive preferably liquid or pasty foods at temperatures below about 100°C with the aim of killing all unwanted vegetative microorganisms. Under the usual pasteurization conditions, however, spores of all microorganisms are normally not inactivated or killed, and thermoduric bacteria also sometimes survive this treatment. In order to kill all the microorganisms present in a food product, including bacterial spores, in order to prepare the so-called sterile preserves, high temperatures distinctly above 100°C over a lengthy period (for example 120°C maintained for 30 minutes) are necessary for neutral pH packaged foods. Although such sterilization conditions render the spores therein harmless, there is also damage to numerous constituents which determine the nutritional value of the food, such as vitamins, macro- and microminerals, coloring matter and flavors, or supporting and texturing substances. Thus, foods obtained by the usual thermal sterilization treatment are to be regarded as being more damaged than fresh foods.

A thermal sterilization treatment at temperatures distinctly above 100°C has proved to be unnecessary when the food which is desired to be sterile is an acid-pickled food whose pH is below 4.5. This is because it has been found that, in contrast to neutral foods, bacterial spores in foods having a pH below 4.5 not only do not germinate but are also subject to alterations which eventually lead to their destruction. Thus, germinative spores are no longer detectable in acidic preserves 2 to 4 weeks after a heat treatment under pasteurization conditions.

Investigations of the effects leading to destruction of bacterial spores (thermally resistant endospores) at acidic pH values revealed that the compound calcium dipicolinate, which was detected in spore capsules and is thought to be responsible for their thermal resistance, is converted in the aqueous acidic medium into the water soluble compound, dipicolinic acid. The latter is washed out of the spore capsule, which then takes up water and swells. Undissociated lipid-soluble acids such as acetic acid, lactic acid or propionic acid are able to enter the spores through the swollen spore capsule and have a lethal effect inside the spore or the vegetative cell formed therefrom. This is why pasteurization of acidic foods is sufficient to lead to complete microbiological stability of such foods.

Those skilled in the art were informed by the inventor in the article " Dauerhaft frisch ohne Kühlpflicht" in the publication " Die Ernährungsindustrie" , 3/97, pages 54/55, that it is possible for foods requiring sterilization to be lastingly preserved even at a pH range of 4.5 to 7 under pasteurization conditions when a different route is followed to make the insoluble calcium dipicolinate soluble and thus remove it from the spore capsule. A need for lastingly preserving foods sterilized exclusively by pasteurization, however, still exists.

## Summary of The Invention

The present invention relates to a process for lastingly preserving neutral or slightly acidic foods that have a pH of about 4.5 to 7 without the need for conventional sterilization conditions, thus avoiding treatment temperatures that are above 100°C for lengthy times.

This process includes treatment of such food products to kill microorganisms and their spores in a manner which is mild for the food product by adding thereto a combination of (i) at least one sodium salt of a lipid-soluble, optionally hydroxyl-substituted, C2 or C3 fatty acid and (ii) at least one non-lipid-soluble acidulant which has a pKa below that of the C2 or C3 fatty acid and which forms complexes with doubly charged alkaline earth metal ions, and optionally (iii) additional amounts of a sodium salt of the acidulant in such amounts and ratios of amounts so that the pH of the food product is in the range of about 4.5 to 7, and the concentration of undissociated fatty acid is at least 0.4% by weight based on the weight of the food product. Preferably, these additives are incorporated in the food products in concentrations of at least 0.5% by weight for the fatty acid salt and at least 0.2% by weight for sodium ions, the percents being based on the weight of the food product.

## Detailed Description of the Preferred Embodiments

The sodium salt of a lipid-soluble fatty acid which is preferably employed as the first component is the sodium salt of acetic acid, sodium acetate. It is also possible for the sodium salt of lactic acid, sodium lactate, to be used instead. The use of a sodium salt of propionic acid likewise appears possible, especially in countries where propionic acid is approved for the preservation of foods.

Where reference is made in the present application to C2 and C3 fatty acids, this term refers to unsubstituted acetic and propionic acids as well as hydroxy derivatives of these acids, and especially lactic acid.

The second component used is a solid acidulant which is not lipid-soluble, has a pKa below that of the fatty acid underlying the sodium salt employed, and which additionally forms complexes with doubly charged alkaline earth metal ions, especially with calcium ions. The term " acidulant" is used in the food art for organic acids which are not subject to restrictions on use in the manufacture and preparation of foods, or are naturally present in foods. The requirement that they have a pKa below that of the C2 or C3 fatty acid means that they must be, at least in their first dissociation stage, stronger acids than acetic acid or, where appropriate, lactic acid or propionic acid. Acidulants for the purpose of the present invention are, as a rule, hydroxyl-containing carboxylic acids or di- or tricarboxylic acids which may additionally contain hydroxyl groups, and which, as a rule, contain from 3 to 6 carbon atoms. Acidulants which may be mentioned are organic acids such as adipic acid, maleic acid, succinic acid, citric acid, fumaric acid, tartaric acid, lactic acid and gluconic acid. The choice of a suitable acidulant takes account of its strength by comparison with the fatty acid present in the sodium salt used, and of its required complexation capacity and, of course, also of the flavoring and other effects which addition of the relevant acidulant has on the particular food. It is preferable to choose an organic acid which is as mild as possible. The use of citric acid is particularly preferred for the purpose of the present invention. However, citric acid can be replaced where appropriate wholly or partly by tartaric acid or ascorbic acid, with ascorbic acid being regarded for the purpose of the present application as an acidulant although it is normally considered as an antioxidant or vitamin.

The combination of sodium salt of a fatty acid, preferably of sodium acetate, with a complex-forming acidulant which is more strongly acidic, has the effect for the purpose of the present invention that the sodium salt, where appropriate combined with other sodium salts approved for foods, makes available a sufficient quantity of sodium ions which are able, in the manner of ion exchange, to convert insoluble calcium dipicolinate in the spore capsule into soluble sodium dipicolinate.

The acidulant used in combination with the sodium salt acts as proton donor. Because of its higher acidity, the presence of the acidulant results in higher concentrations of undissociated fatty acid, that is to say undissociated acetic acid or, where appropriate, lactic acid or propionic acid, than is normally found at pH values above 4.5. A preferred buffer system may be used to keep the pH in the range of from 4.5 to 7. A preferred buffer system is one based on the acidulant used, particularly of a sodium salt of this acidulant.

When this combination of substances is added to a food having a pH of 4.5 or more and containing spores of microorganisms such as thermally resistant endospores, an environment is set up in the food that causes the spores to germinate. These germinated spores can be killed thermally, under pasteurization conditions, or with the aid of the undissociated fatty acid which migrates into the microorganisms.

It is, as a rule, necessary for lasting preservation to heat the food adequately. It is possible to use temperatures and exposure times which may correspond to the usual pasteurization conditions but in some circumstances, milder conditions can be used. When spore-containing foods are heated, the spore walls start to swell due to the water present in the food, and the spores then develop into vegetative bacteria. These vegetative microorganism forms are killed due to the relatively high concentrations, which are present despite the neutral to weakly acidic pH. Elevated temperatures assist in the effectiveness of the treatment.

It is assumed that it is not absolutely necessary in every case and with every type of food to carry out a heat treatment corresponding to a usual pasteurization at temperatures below 100°C. It may suffice, when the consistencies and types of the foods are suitable, to add the combination according to the invention of sodium fatty acid salt and acidulant in adequate and correct quantities in order to achieve lasting sterility of the food, similar to the case of known acidic preservatives.

It is also within the scope of the present invention to add the combination of substances to the food products and then to treat the latter thermally under conditions which correspond at least in part to normally customary sterilization conditions. Since such a procedure can cancel considerable advantages of the process of the present invention, that is to say the maintenance of the valuable constituents of the food product, this variant of the process is normally not preferred. The special contribution of the present invention is precisely the possibility of avoiding such sterilization conditions.

It is possible to further improve the effect of the combination of the sodium salt of the fatty acid and the acidulant, or to influence it in a way which is advantageous for the particular foodstuff. One such possibility is to supplement the combination of substances by adding another ingredient which is known to cause bacterial spores to change from the spore state into the vegetative form of the particular microorganism. Substances of this type, which are also known as " lure substances" , comprise, in particular, glucose, which is preferred for use in the present invention. A preferred concentration range for glucose or similar lure substance is between about a range from 0.1 and 1% by weight. Glucose may additionally have an advantageous effect on the flavor properties of the particular food product.

Another advantageous embodiment of the present process relates to replacing part of the acidulant used by an acidulant which has reducing properties and also acts as antioxidant and is able to protect the food from oxidative changes. Ascorbic acid is particularly suitable as such a replacement acidulant and is therefore preferred for use in suitable minor amounts such as about 0.1 to 1% by weight.

Another possibility for intensifying the desired effect of the combination of substances is to add the individual components of the combination of substances successively rather than together. For example, by first adding part or all of the acidulant, a more strongly acidic environment is set up temporarily in the treated food and promotes spore germination which itself kills some of the vegetative microorganisms. When the sodium fatty acid salt is then added somewhat later, the content of spores to be killed in the treated food is less and the temperatures and/or treatment times for a subsequent heat treatment can be chosen to be lower where appropriate.

When the process is carried out in practice, the addition of the combination of substances can take place in various ways depending on the treated food product, it also being possible to add the combination of substances at the stage of a pretreatment customary, for example, for the particular food. Thus, the combination of substances according to the invention can be added to vegetables before blanching, and the elevated temperatures during the blanching step can in this case at least partly anticipate and replace a subsequent heat treatment. Other pretreatment stages in which the combination of substances according to the invention can be added to the treated food comprise precooking or boiling of a food as is necessary, for example, when convenience foods are manufactured from components which have different cooking times, so that the subsequent heat treatment is insufficient for the required cooking of individual food ingredients. It is also possible for the combination of substances according to the invention to be added to the food during a vacuum treatment, a dip treatment or during spraying of a coating or application of covering, such as breadcrumbs. It is moreover possible for the combination of substances to be employed in the form of a dry mixture which is rubbed into a food such as meat or fish.

The definitive preservation as a rule takes place by an additional heat treatment under customary pasteurization conditions, that is to say at temperatures below 100°C, for example, with temperatures and treatment times customary for pasteurizing various foods (for example 80-85°C for 30-40 min or 90-92°C for 20-30 min) . As already stated, heating the food to which the combination of substances according to the invention has been added briefly at temperatures above 100°C up to the range of customary sterilization temperatures is also not precluded if this does not deleteriously affect the food or otherwise offset the advantages of the invention.

It has furthermore proved to be advantageous for the practical implementation of the process to start from a plurality of premixes of solid substances. This makes it possible to adjust, by mutual mixing, the combination of substances which is optimum or ideal for the particular food to be treated. Since both the sodium salts and acidulants are solid salt-like or powdered substances, it is possible to prepare three (or, if desired, even more) premixes which can easily be combined. These premixes preferably differ in the pH obtained when they are respectively dissolved in water. Thus, the first premix contains as main component the sodium salt of the fatty acid which, as salt of a rather weak acid, results in an alkaline reaction in aqueous solution. To stabilize the pH of the food in the required pH range of about 4.5 to 7, another premix is prepared, preferably containing the solid acidulant and its sodium salt in suitable amounts, and having buffering characteristics. A third premix can contain as a main component the acidulant and shows a distinctly acidic reaction (pH < 4) in aqueous solution in the absence of the remaining substances of the combination.

It has proved to be advantageous to add conditioners and other substances whose presence may have advantageous effects without them being among the essential components for carrying out the process. Thus, the sodium content and moisture content of the particular premixes can be adjusted better by including a certain amount of sodium chloride therein. It is furthermore possible to add to the premixes inorganic or organic salts which influence the pH of the finished mixture, for example a sodium carbonate or a substance such as sodium diacetate. It is furthermore possible to add a " lure substance" or a reducing acidulant such as ascorbic acid to the premixes. The process according to the invention is suitable for all foods that have a water content sufficient for the combination these substances in the form of an aqueous solution. The foods are thus, in particular, those which are in the form of a liquid or paste or in which a liquid vehicle phase is present, for example in sterile preserves. The liquid content of suitable foodstuffs can be expressed by stating a value for the possible water activities, which may be in a range of $a_w$ from 0.93 to 0.99.

It is possible to treat vegetables, fungi, herbs, spices, flavorings, meat, fish, seafood, eggs, sauce preparations, prepared pasta and rice and dairy products, although this list cannot be regarded as complete. Foods of these types are converted by the process according to the invention into finished food products which can be referred to as sterile preserves or refrigerator products and may be, for example, preserved vegetables, meat or fish, instant dishes, including those to be distributed through deep-freeze chains, delicatessen products or instant sauces, this list not making any claim to completeness either.

Food products preserved by the process according to the invention can, as a rule, be distinguished from food products which have been preserved by conventional processes in that they have an increased fatty acid salt content, in particular an increased acetate content. This acetate content (anhydrous acetate) is 0.5% by weight or higher, that is to say at a level which is distinctly higher than the acetate content normally detectable in foods. Ranges for amounts of substances which can be regarded as indicating use of the process according to the invention are sodium acetate contents in the range of about 0.5 to 2% by weight and sodium citrate contents in the range of about 0.1 to 0.5% by weight, and the additional presence at the same time of glucose or ascorbic acid in the range of about 0.1 to 1% by weight and of in the range from 0.1 to 1% by weight.

It has emerged that food products preserved under mild conditions by the process according to the invention have long shelf lives, with no deterioration in quality being detected when the products are stored at 20 to 30°C for from 4 to 24 months.

**Examples**

The present invention is explained in further detail hereinafter by means of examples of its use for a wide variety of food products. The statement " %" always means in this connection percent by weight of the food product unless indicated otherwise.

Example 1: Manufacture of a chicken soup preserved by the process of the invention

This example contains data which illustrate the use of the process according to the invention for a complex food product composed of a plurality of individual ingredients. The process according to the invention can be carried out starting from, for example, three premixes which contain the various components for carrying out the process according to the invention and which are employed in a mixture which differs somewhat, appropriate for the particular food, so that the final concentrations indicated hereinafter are obtained.

The following food ingredients are used to manufacture a chicken soup:

| | |
|---|---|
| chicken fat, molten | 2% |

(continued)

| | |
|---|---|
| poultry meat, pretreated | 7% |
| vegetable mixture, pretreated | 8% |
| royale, pretreated | 3% |
| added liquid (broth) | 80% |
| | 100% |

Those ingredients identified as " pretreated" are treated according to the invention as described hereinafter under a) to c).

a) Poultry meat

Poultry meat is cooked in a cooking solution which is prepared cold and contains (based on the weight of the finished cooking solution):

| | |
|---|---|
| water | 95.910% |
| sodium acetate | 0.350% |
| citric acid | 0.125% |
| sodium chloride | 0.060% |
| sodium carbonate | 0.0175% |
| ascorbic acid | 0.015% |
| sodium diacetate | 0.0125% |
| sodium citrate | 0.010% |
| D-glucose (monohydrate) | 0.500% |
| thickened chicken broth | 1.000% |
| starch-based binder | 2.000% |

1.4 parts of fresh untreated chicken meat (deep-frozen semifinished product) are added to four parts of the cooking broth mentioned, and the solution is heated with the meat to 80°C and kept at 80 to 85°C for 30 minutes.

The chicken meat is then separated from the cooking broth, and to the latter are added, based on 100% of cooking broth,

| | |
|---|---|
| sodium acetate | 0.350% |
| sodium chloride | 0.045% |
| sodium carbonate | 0.015% |
| sodium diacetate | 0.0125% |
| white wine | 0.600% |

The cooking broth is stored for subsequent use.

The weight of the chicken meat removed after the cooking was 67.5% of the initial weight of deep-frozen chicken meat.

b) Royale

To manufacture a royale, 4 parts of the same cooking broth as above under a) are mixed with 1.4 parts of royale (deep-frozen semifinished product), and the resulting mixture is heated to 80°C and kept at 80 to 85°C for 30 minutes. The royale is then separated from the cooking broth.

The cooking broth from the royale treatment is mixed with the same ingredients as the cooking broth from a) and combined with the latter after a screening.

The weight of the removed royale after the treatment was 96% of the initial weight of deep-frozen royale.

c) Vegetables

The vegetable ingredient used for the chicken broth comprised equal parts by weight of celery strips, carrot strips and leak slices.

A blanching solution is prepared and contains, based on 100% by weight of the finished solution:

| water | 98.503% |
|---|---|
| sodium acetate | 1.000% |
| citric acid | 0.215% |
| sodium chloride | 0.150% |
| sodium carbonate | 0.045% |
| ascorbic acid | 0.035% |
| sodium diacetate | 0.035% |
| sodium citrate | 0.017% |

One part by weight of vegetable mixture is blanched with two parts of blanching solution at 85 to 87°C for two minutes. The solution is poured off and discarded. The vegetables obtained as residue on a screen are quenched with cold water without additives, and then left to drain.

The weight of vegetable mixture removed after the blanching was 95.7% of the initial weight of fresh vegetables.

To manufacture the finished chicken soup, the ingredients of chicken fat, chicken meat, royale, vegetables and hot broth (from above stages a) and b)) are mixed in the amounts stated at the outset and pasteurized in a rotating autoclave (6 rpm) with a back-pressure of 0.5 bar at 92°C for 40 min, and then cooled to 30°C.

The concluding measure, as also is the case in all subsequent examples, is a microbiological investigation of the product after waiting for one week at room temperature (about 20°C), and then release.

Example 2: Spaghetti dish ready to eat

A cooking solution is prepared containing, based on 100% by weight of the finished cooking solution:

| water | 97.550% |
|---|---|
| sodium acetate | 1.7535% |
| citric acid | 0.255% |
| sodium chloride | 0.245% |
| sodium carbonate | 0.0775% |
| ascorbic acid | 0.035% |
| sodium diacetate | 0.063% |
| sodium citrate | 0.021% |

The cooking solution is heated to about 95°C, and 1 part by weight of spaghetti is added per 10 parts by weight of cooking liquid and kept at 90°C for 9 min. After the cooking liquid has been poured off, the spaghetti is shaped to nests, packed in bags and sealed under vacuum.

A pasteurization is then carried out at 92°C for 55 min, followed by cooling to room temperature.

Example 3: Instant goulash dish in bound sauce

A cooking solution is prepared cold, containing, based on 100% by weight of the finished dish:

| water | 38.150% |
|---|---|
| sodium acetate | 0.626% |
| citric acid | 0.255% |
| sodium chloride | 0.110% |
| sodium carbonate | 0.030% |
| ascorbic acid | 0.035% |
| sodium diacetate | 0.023% |
| sodium citrate | 0.021% |

and mixed with the following garnishings

| onions, diced | 10% |
|---|---|
| meat, diced | 50% |

The cooking solution with the garnishings is heated to 80°C and kept at 80 to 85°C for 40 min. The following components are then added:

| sodium acetate | 0.626% |
|---|---|
| sodium chloride | 0.075% |
| sodium carbonate | 0.026% |
| sodium diacetate | 0.023% |

and cooking is continued for 10 min. The meat is then separated from the cooking broth. The cooking broth is cooled, clarified and mixed with dry ingredients customary for preparing a sauce, such as spices, salt and starch, which are stirred in. It is also possible in this case as an option to add blanched vegetables (for example peppers, mushrooms, treated as under Example 1 c)).

65% by weight of the sauce are added to 35% by weight of the meat, and the finished mixture is pasteurized with a back-pressure of 0.5 bar and slow rotation (6 rpm) at 105°C for 60 min and then cooled to room temperature.

Example 4: Salmon fillet in its own juices (instant dish)

Salmon fillets are treated uniformly on their surfaces with a dry mixture which contains, based on the total weight including 98.44% by weight of salmon, the following ingredients:

| sodium acetate | 0.380% |
|---|---|
| citric acid | 0.860% |
| sodium chloride | 0.150% |
| sodium carbonate | 0.031% |
| ascorbic acid | 0.039% |
| sodium diacetate | 0.015% |
| sodium citrate | 0.085% |

The treated salmon fillets are placed in a refrigerator for 2 h and then poached in their own juices for 10 to 15 min, packed in dishes and sealed under vacuum.

The product is then pasteurized at 92°C for 55 min and cooled to room temperature.

Example 5: Preserved vegetables

Peppers are blanched in the form of quarters or strips at 85 to 87°C for 2 min using an aqueous solution (100% by weight) which contained the following ingredients:

| citric acid | 0.160% |
|---|---|
| sodium chloride | 0.020% |
| sodium citrate | 0.017% |
| sodium carbonate | 0.003% |

The weight of the peppers removed after the blanching was 95.7% of the initial weight of fresh peppers.

After cooling with cold water and draining, 50% by weight of the blanched peppers are mixed with 50% by weight of a cold aqueous solution (100% by weight) which contained:

| sodium acetate | 0.835% |
|---|---|
| citric acid | 0.110% |
| sodium chloride | 0.120% |
| sodium carbonate | 0.035% |
| ascorbic acid | 0.070% |
| sodium diacetate | 0.030% |

plus

| wine vinegar (10%) | 20.00% |
|---|---|
| sweetener (sodium saccharin) | 0.02% |
| cooking salt (refined) | 1.50% |

The product requires no pasteurization and can be kept without cooling after packaging under vacuum.

Preserved pickled gerkins can be manufactured in a very similar way, adding as additional ingredient about 1.1% by weight of a moist solid seasoning obtained, for example, by pickling dry dill, mustard seeds and onion rings in 10% vinegar.

Example 6: Instant turkey fillet dish with garnishes

An instant dish is manufactured containing:

| turkey meat, pretreated rice/vegetables, | 32% |
|---|---|
| pretreated | 34% |
| binding sauce, pretreated | 34% |

The ingredients identified as " pretreated" are treated according to the invention as described hereinafter under a) to d).

a) Pretreatment of turkey meat

A marinade is prepared cold in a vacuum tumbler with the following composition:

| turkey meat | 91.10% |
|---|---|
| binder | 3.00% |
| water | 3.00% |
| spices | 0.50% |
| sodium acetate | 1.336% |
| citric acid | 0.202% |
| sodium chloride | 0.190% |
| sodium carbonate | 0.058% |
| ascorbic acid | 0.053% |
| sodium diacetate | 0.048% |
| sodium citrate | 0.013% |
| D-glucose (monohydrate) | 0.500% |

The marinated product was stored overnight and, the next day, fried in hot oil for about 8 min and packaged hot.

b) Cooking of rice

A cooking solution is prepared containing, based on 100% by weight of the finished cooking solution:

| water | 97.00% |
|---|---|
| sodium acetate | 1.753% |

(continued)

| citric acid | 0.295% |
|---|---|
| sodium chloride | 0.250% |
| sodium carbonate | 0.079% |
| ascorbic acid | 0.035% |
| sodium diacetate | 0.063% |
| sodium citrate | 0.025% |
| D-glucose (monohydrate) | 0.500% |

The cooking solution is heated to about 95°C, and 1 part by weight of rice is added per 10 parts by weight of cooking liquid and boiled for about 10 min, after which the rice is separated from the cooking liquid.

c) Blanched vegetables

One part by weight of a vegetable mixture consisting of deep-frozen beans and onions is blanched at 85°C for about 3 min with two parts by weight of a blanching liquid of the following composition:

| water | 97.050% |
|---|---|
| sodium acetate | 1.837% |
| citric acid | 0.169% |
| sodium chloride | 0.245% |
| sodium carbonate | 0.079% |
| ascorbic acid | 0.044% |
| sodium diacetate | 0.066% |
| sodium citrate | 0.010% |
| D-glucose (monohydrate) | 0.500% |

The vegetables are separated from the blanching liquid, which is discarded.

d) Binding sauce : A hot preparation is manufactured with the following composition, and is packaged hot:

| water | 86.800% |
|---|---|
| binder | 3.800% |
| glucose syrup | 3.200% |
| flavoring | 2.400% |

(continued)

| stabilizers | 1.200% |
|---|---|
| spices | 1.050% |
| lemon juice | 0.150% |
| sodium acetate | 0.668% |
| citric acid | 0.067% |
| sodium chloride | 0.090% |
| sodium carbonate | 0.029% |
| ascorbic acid | 0.018% |
| sodium diacetate | 0.024% |
| sodium citrate | 0.004% |
| D-glucose (monohydrate) | 0.500% |

All the ingredients are mixed, at least partly in the hot state, in the sequence indicated at the outset, and are packed under vacuum. The finished product is pasteurized at 70°C for 30 min without back-pressure, after which it is cooled to about 20°C.

## Claims

1. A process for preserving food products, which comprises adding to the food product a combination of (i) at least one sodium salt of a lipid-soluble, optionally hydroxysubstituted, C2 or C3 fatty acid, and (ii) at least one non-lipid-soluble acidulant which has a pKa below that of the C2 or C3 fatty acid and which forms complexes with doubly charged alkaline earth metal ions, optionally with (iii) an additional amount of a sodium salt of the acidulant, wherein the pH of the food product is in the range of about 4.5 to 7, and undissociated fatty acid is present in an amount at least 0.4% by weight based on the weight of the food products to kill microorganisms and their spores in the food product.

2. The process according to Claim 1, wherein the combination is added such that the fatty acid salt is present at a concentration of at least 0.5% by weight, or provides at least 0.2% by weight of sodium ions, the percents in each case being based on the weight of the food products.

3. The process according to Claim 1, wherein the fatty acid is acetic acid and the acidulant is selected from citric acid, tartaric acid, ascorbic acid or mixtures thereof.

4. The process according to Claim 1, which further comprises packaging the food product and then subjecting the food product to a heat treatment at temperatures of below about 100°C, after the addition of the combination of the sodium salt of the fatty acid and the acidulant.

5. The process according to Clam 1, wherein the acidulant is added to the food product before the sodium salt of the fatty acid is added.

6. The process according to Claim 1 wherein the acidulant and sodium salt of the fatty acid are added together to form a premix which is then added to the food product.

7. The process according to Claim 1, which further comprises adding at least one of a reducing acidulant, an ingredient which promotes spore germination or a sodium salt conditioner to the food product.

8. The process according to Claim 7, wherein ascorbic acid is added as reducing acidulant, glucose is added as ingredient which promotes spore germination, and sodium chloride is added as sodium salt condition.

9. The process according to Claim 1, wherein the combination of the sodium salt of the fatty acid and the acidulant is added to the food product during a conditioning pretreatment step which includes one of blanching, precooking, boiling, a vacuum treatment, a dipping, spraying or coating.

10. The process according to Claim 1, wherein the combination of the sodium salt of the fatty acid and the acidulant which is to be added to the treated food has a composition which takes account of the nature of the particular food and comprises (1) a first premix containing as a main component the sodium salt of the fatty acid and having an alkaline reaction in aqueous solutions, (2) a second premix containing a combination of the solid acidulant and its sodium salt and having a buffering effect in the pH range from 4.5 to 7, and (3) a third premix containing as a main component the acidulant and having a distinctly acidic reaction (pH < 4.0) in aqueous solution.

11. The process according to Claim 10, wherein at least one of the premixes contain, as further ingredient, a conditioner in the form of sodium chloride or an inorganic or organic sodium salt, to influence the pH.

12. The process according to Claim 11 wherein each premix contains a conditioner.

13. The process according to Claim 10, wherein the third component with an acidic reaction contains as further ingredient a reducing acidulant.

14. The process according to Claim 13 wherein the reducing acidulant is ascorbic acid.

**15.** The process according to Claim 1, wherein the treated food comprises a selected from vegetable, fungi, herb, spice, flavoring, meat, fish, seafood, egg sauce preparation, pasta, rice or a dairy product and in which the preserved food product is in the form of an instant dish, a chilled dish, a delicatessen product or an instant sauce.

**16.** A preserved food product according to Claim 15 which exhibits an acetate content of at least 0.5% by weight based on the weight of the food product.

**European Patent Office**

## EUROPEAN SEARCH REPORT

Application Number

EP 98 20 4480

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN<br>vol. 015, no. 472 (C-0889),<br>29 November 1991<br>-& JP 03 201940 A (PRIMA MEAT PACKERS LTD), 3 September 1991<br>* abstract * | 1-3,6,<br>15,16 | A23L3/3508 |
| X | PATENT ABSTRACTS OF JAPAN<br>vol. 018, no. 071 (C-1162),<br>7 February 1994<br>-& JP 05 284953 A (MINORU IINUMA;OTHERS: 01), 2 November 1993<br>* abstract * | 1-3,6,<br>15,16 | |
| X | PATENT ABSTRACTS OF JAPAN<br>vol. 097, no. 010, 31 October 1997<br>-& JP 09 140365 A (NIPPON SHINYAKU CO LTD), 3 June 1997 | 1,15,16 | |
| Y | * abstract * | 4 | |
| Y,D | PHILIPP GERT DIETER: "Dauerhaft Frisch ohne Kühlpflicht"<br>DIE ERNÄHRUNGSINDUSTRIE,<br>vol. 3, 1997, pages 54-55, XP002104166<br>* page 54, column 3; figure 1 * | 4 | **TECHNICAL FIELDS SEARCHED (Int.Cl.6)**<br><br>A23L<br>A23B |
| A | * page 55, column 3 * | 1-3,5-16 | |
| A | PATENT ABSTRACTS OF JAPAN<br>vol. 007, no. 056 (C-155), 8 March 1983<br>& JP 57 206371 A (UENO SEIYAKU KK),<br>17 December 1982<br>* abstract * | 1,16 | |
| A | PATENT ABSTRACTS OF JAPAN<br>vol. 097, no. 011, 28 November 1997<br>& JP 09 187220 A (MEIYUU SANGYO KK),<br>22 July 1997<br>* abstract * | 1 | |

-/--

The present search report has been drawn up for all claims

| Place of search | Date of completion of the search | Examiner |
|---|---|---|
| THE HAGUE | 4 June 1999 | Boddaert, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 98 20 4480

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN vol. 014, no. 176 (C-0707), 9 April 1990 & JP 02 023854 A (RIKEN KORYO KOGYO KK), 26 January 1990 * abstract * | 1 | |
| A | PATENT ABSTRACTS OF JAPAN vol. 014, no. 074 (C-0687), 13 February 1990 & JP 01 291747 A (KYOKUTO INTERNATL CORP), 24 November 1989 * abstract * | 1 | |
| A | DATABASE WPI Section Ch, Week 9230 Derwent Publications Ltd., London, GB; Class D12, AN 92-248286 XP002104131 & SU 1 685 361 A (NOVOS SOVIET COOPERATIVE TRADE INST), 23 October 1991 * abstract * | 1 | |
| A | PATENT ABSTRACTS OF JAPAN vol. 017, no. 297 (C-1068), 8 June 1993 & JP 05 023106 A (SUKAIRAAKU:KK), 2 February 1993 * abstract * | 1 | |
| A | US 4 241 095 A (MASAI HIROSHI ET AL) 23 December 1980 | | |

TECHNICAL FIELDS SEARCHED (Int.Cl.6)

The present search report has been drawn up for all claims

| Place of search | Date of completion of the search | Examiner |
|---|---|---|
| THE HAGUE | 4 June 1999 | Boddaert, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 98 20 4480

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-1999

| Patent document cited in search report | Publication date | Patent family member(s) | Publication date |
|---|---|---|---|
| US 4241095 A | 23-12-1980 | NONE | |

For more details about this annex : see Official Journal of the European Patent Office, No. 12/82